# EUROPEAN PATENT APPLICATION

(11) **EP 4 763 644 A1**
(43) Date of publication of application: **24.06.2026**
(21) Application number: 24221046.6
(22) Date of filing: 18.12.2024
(51) Int. Cl.: B60W 30/14, B60W 50/10

(54) **A COMPUTER SYSTEM COMPRISING PROCESSING CIRCUITRY CONFIGURED TO CONTROL A CRUISE CONTROL SYSTEM OF A VEHICLE**

(71) Applicant: Volvo Truck Corporation, 405 08 Göteborg (SE)
(72) Inventor: Eriksson, Anders, 423 49 Torslanda (SE); Kollberg, Peter, 448 35 Floda (SE)
(74) Representative: Valea AB

(57) **Abstract**

The present disclosure relates to a computer system (400) comprising processing circuitry (402) configured to control a cruise control system (22) of a vehicle (1), the vehicle (1) comprising a power system (28) configured to provide propulsion power to the vehicle (1), and an accelerator pedal (20), wherein the processing circuitry (402) being further configured to:
- obtain a target speed;
- on the basis of the target speed, determine a minimal allowed speed to which the vehicle (1) is allowed to reduce; and
- in response to determining that the accelerator pedal (20) has been depressed, temporarily adjust the minimal allowed speed until a criterion is fulfilled.

## Description

### TECHNICAL FIELD

The disclosure relates generally to speed control. In particular aspects, the disclosure relates to a computer system comprising processing circuitry configured to control a cruise control system of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Predictive cruise control is an advanced system used in vehicles to optimize speed by anticipating road conditions ahead. The predictive cruise control may use data from navigation systems, digital maps, and various sensors to adjust the vehicle's speed based on upcoming road topography and traffic conditions. The predictive cruise control may typically aim to enhance safety, however, the speed set by the predictive cruise control may sometimes be lower than necessary. This conservative approach usually prioritizes safety but may not always result in the most efficient or desirable driving experience. Users may often have to manually deactivate or override the cruise control system if they find the automated speed settings undesirable.

### SUMMARY

According to a first aspect of the disclosure, a computer system is provided. The computer system comprising processing circuitry configured to control a cruise control system of a vehicle. The vehicle comprises a power system configured to provide propulsion power to the vehicle, and an accelerator pedal. The processing circuitry is further configured to:
- obtain a target speed;
- on the basis of the target speed, determine a minimal allowed speed to which the vehicle is allowed to reduce; and
- in response to determining that the accelerator pedal has been depressed, temporarily adjust the minimal allowed speed until a criterion is fulfilled.

The first aspect of the disclosure may seek to provide an improved cruise control system with enhanced flexibility. For instance, the system may allow the vehicle to operate at a lower speed than the target speed, meanwhile allow the minimal allowed speed to be temporarily adjustable. This may ensure that the vehicle can maintain a consistent cruising speed setup, e.g., the target speed, while also able to adapt to varying conditions. The balance of maintaining a constant target speed while adapting the minimal allowed speed as needed may enhance a combination of fuel efficiency, safety and flexibility. A technical benefit may include enhanced flexibility and adaptability of the cruise control system.

The term "temporarily" may imply that the adjustment of the minimal allowed speed is enabled for a period of time. Once an appropriate 'restore' condition is met, it may automatically revert to the determined minimal allowed speed, which may be particularly beneficial in situations where a temporary adjustment is necessary.

The computer system referred to herein may be a vehicle on-board system. It may be a dedicated system specifically for managing speed adjustments or may be integrated into the cruise control system.

Optionally in some examples, including in at least one preferred example, the feature of temporarily adjusting the minimal allowed speed until a criterion is fulfilled comprise temporarily increase the minimal allowed speed until a criterion is fulfilled. By allowing the minimal allowed speed to be temporarily increased, it may provide the possibility of enhancing a driving comfort when the minimal allowed speed is set too conservatively low. Additionally or alternatively, this flexibility may enable the vehicle to better match the flow of traffic in certain situations, reducing the likelihood of creating slowdowns or traffic disruptions. In this way, the cruise control system may be more adaptable to various driving conditions. A technical benefit may include improved safety, efficiency, and overall driving comfort.

Optionally in some examples, including in at least one preferred example, the processing circuitry is further configured to activate the cruise control system. Once the cruise control system is activated, the adjustment of the minimal allowed speed can be made without needing to override or deactivate the system. This may ensure continuous operation without interruptions, leading to smoother driving experiences and enhanced safety.

Optionally in some examples, including in at least one preferred example, the criterion is fulfilled when the minimal allowed speed has reached the target speed. This may ensure that the minimal allowed speed does not surpass the predetermined target speed, maintaining consistent speed control as intended by the cruise control system. A technical benefit may include enhanced safety.

Optionally in some examples, including in at least one preferred example, the criterion is fulfilled when the minimal allowed speed has reached a speed that corresponds to a degree that the accelerator pedal is depressed, and wherein the speed is higher than the minimal allowed speed but lower than the target speed. As such, the minimal allowed speed may be adjusted to any value between the initial determined speed and the target speed set by an user using the accelerator pedal. This flexibility may allow the vehicle to adjust to varying traffic conditions and road situations without exceeding the target speed or requiring the system to be deactivated.

Optionally in some examples, including in at least one preferred example, the vehicle is travelling on a road with predetermined road characteristics, wherein the processing circuitry is further configured to:
- determine that a driving condition has changed; and
- in response thereto, determine that a reset condition is fulfilled, reset the temporarily increased speed to the determined minimal allowed speed.

The change in driving conditions may be interpreted as a 'reset condition' signal. The minimum allowed speed should be reset to its initial value. If a new target speed is obtained, the minimum allowed speed will be adjusted accordingly. By resetting the minimal allowed speed when appropriate, the system may maintain its efficiency and effectiveness, ensuring that the cruise control operates within optimal parameters.

Optionally in some examples, including in at least one preferred example, the predetermined road characteristics comprise an uphill with a topmost point of the hill in the front, or a roundabout, wherein the feature of determining that a driving condition has changed comprises determine that a vehicle starts to accelerate.

Optionally in some examples, including in at least one preferred example, the target speed is associated with a speed limit of a road, and wherein the feature of obtaining a target speed comprises:
- obtain map data information, the map data information comprising speed limit of a road that the vehicle is currently travelling on or a road that the vehicle is approaching.

As such, the speed limit of the road may be automatically set as the target speed in the cruise control system.

Optionally in some examples, including in at least one preferred example, the target speed is obtained via a user interface. As such, the target speed may be manually set by the user in accordance with the user's preference.

Optionally in some examples, including in at least one preferred example, the minimal allowed speed is lower than the target speed by a predefined value. Purely by way of example, the minimum allowed speed could be set from 5 km/h to 10 km/h lower than the target speed, allowing the vehicle to operate in a fuel-saving mode.

Optionally in some examples, including in at least one preferred example, the minimal allowed speed is determined based on a characteristic of a road that the vehicle is currently travelling on or a road that the vehicle is approaching. Purely by way of examples, the minimal allowed speed may be set lower, such as further from the target speed, for curved or hilly roads compared to flat roads. As another non-limiting example, the minimum speed may be reduced in urban areas compared to highways. A technical benefit may include that an appropriate minimal allowed speed is set.

Optionally in some examples, including in at least one preferred example, the characteristics of the road comprise a roundabout, wherein the minimal allowed speed is determined based on a radius of the roundabout.

Optionally in some examples, including in at least one preferred example, the processing circuitry is further configured to cause a user interface to communicate the target speed and the minimal allowed speed to a user.

According to a second aspect of the present disclosure, a vehicle is provided. The vehicle comprises a cruise control system and the computer system of any examples of the first aspect of the present disclosure. Accordingly, technical benefits of the second aspect of the disclosure are largely analogous to the technical benefit of the first aspect of the disclosure.

According to a third aspect of the present disclosure, a computer-implemented method for controlling a cruise control system of a vehicle is provided. The vehicle comprises a power system configured to provide propulsion power to the vehicle, and an accelerator pedal. The method comprises:
- obtaining, by processing circuitry of a computer system, a target speed;
- on the basis of the target speed, determining, by the processing circuitry, a minimal allowed speed at which the vehicle is allowed to reduce to; and
- in response to determining that the accelerator pedal has been depressed, temporarily adjusting, by the processing circuitry, the minimal allowed speed until a criterion is fulfilled.

Technical benefits of the third aspect of the disclosure are largely analogous to the technical benefit of the first aspect of the disclosure. It shall also be noted that all examples of the third aspect of the disclosure are applicable to and/or combinable with all examples of the first aspect of the disclosure, and vice versa.

Optionally in some examples, including in at least one preferred example, the feature of temporarily adjusting the minimal allowed speed comprises temporarily increasing the minimal allowed speed.

Optionally in some examples, including in at least one preferred example, the method further comprises activating the cruise control system.

Optionally in some examples, including in at least one preferred example, the criterion is fulfilled when the minimal allowed speed has reached the target speed.

Optionally in some examples, including in at least one preferred example, the criterion is fulfilled when the minimal allowed speed has reached a speed that corresponds to a degree that the accelerator pedal is depressed, and wherein the speed is higher than the minimal allowed speed but lower than the target speed.

Optionally in some examples, including in at least one preferred example, the vehicle is travelling on a road with predetermined road characteristics. The method further comprising:
- determining, by the processing circuitry, that a driving condition has changed;
- in response thereto, determine that a reset condition is fulfilled, resetting, by the processing circuitry, the temporarily increased speed to the determined minimal allowed speed.

Optionally in some examples, including in at least one preferred example, the predetermined road characteristics comprise an uphill with a topmost point of the hill in the front or a roundabout, wherein the feature of determining that a driving condition has changed comprises determine that a vehicle starts to accelerate.

Optionally in some examples, including in at least one preferred example, the target speed is associated with a speed limit of a road. The method further comprises:
- obtaining, by the processing circuitry, map data information, the map data information comprising speed limit of a road that the vehicle is currently travelling on or a road that the vehicle is approaching.

Optionally in some examples, including in at least one preferred example, the target speed is obtained via a user interface.

Optionally in some examples, including in at least one preferred example, the minimal allowed speed is lower than the target speed by a predefined value.

Optionally in some examples, including in at least one preferred example, the minimal allowed speed is determined based on a characteristic of a road that the vehicle is currently travelling on or a road that the vehicle is approaching.

Optionally in some examples, including in at least one preferred example, the characteristics of the road comprise a roundabout, wherein the minimal allowed speed is determined based on a radius of the roundabout.

Optionally in some examples, including in at least one preferred example, the method further comprises causing, by the processing circuitry, a user interface to communicate the target speed and the minimal allowed speed to a user.

According to a fourth aspect of the disclosure, a computer program product is provided. The computer program product comprises program code for performing, when executed by the processing circuitry, the method according to the third aspect.

According to a fifth aspect of the disclosure, a non-transitory computer-readable storage medium is provided. The non-transitory computer-readable storage medium comprises instructions, which when executed by the processing circuitry, cause the processing circuitry to perform the method according to the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle of a schematic side view according to an example.
**FIG. 2** schematically shows a cruise control system and its associated systems in a vehicle, according to an example.
**FIG. 3** schematically shows a vehicle travelling on a hill.
**FIG. 4** is an exemplary flow chart illustrating actions involved in a method for controlling a cruise control system of a vehicle according to an example.
**FIG. 5** is a schematic diagram of an exemplary computer system for implementing methods disclosed herein.

### DETAILED DESCRIPTION

The detailed description set forth below provides information and examples of the disclosed technology with sufficient detail to enable those skilled in the art to practice the disclosure.

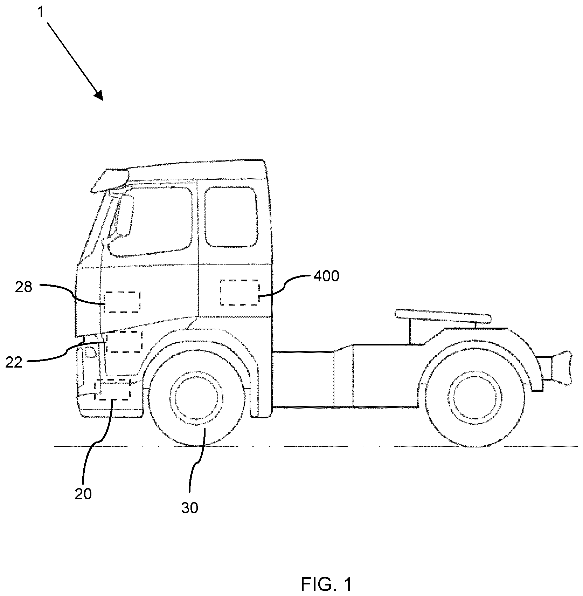

FIG. 1 depicts a vehicle 1, which is exemplified by a truck.

The vehicle 1 may be a heavy-duty vehicle, such as truck, bus, and construction equipment, among other vehicle types. Although the disclosure may be described with respect to a particular vehicle, the disclosure is not restricted to any particular vehicle, but may be also used in other vehicles such as, trailers, wheel loaders, articulated haulers, excavators, backhoe loaders, passenger cars, marine vessels etc. It may also be applied in various industrial construction machines or working machines.

The vehicle 1 may be a truck for towing one or more trailers (not shown). It shall however be understood that the vehicle may be any other type of vehicle, such as another type of truck, a bus, a passenger car, and construction equipment, such as an excavator, a wheel loader, etc. The vehicle 1 may be operated by a user and/or be at least partly automatically driven, i.e., it may be a vehicle comprising autonomous driving capabilities. The vehicle 1 may be a fully electric vehicle or a hybrid vehicle or it may be driven only using a combustion engine. The vehicle 1 may comprise one or more electric motors/generators and/or an internal combustion engine for driving the vehicle 1.

The term vehicle will be used herein when referring to any of the above types of vehicles.

The vehicle 1 comprises a power system 28 for providing propulsion power to the vehicle 1, preferably via a transmission (not shown). Purely by way of example, the power system 28 may comprise an internal combustion engine, one or more electric motors, or a combination of both. The transmission may convert a torque generated from the power system 28 to a torque that is suitable for driving a set of the wheels 30 and transfer the torque to the set of the wheels 204. The transmission may comprise a plurality of gears and may be adapted to individually engage each one of a plurality of gears, as needed. By selecting different gears, the torque transmitted to the wheels 30 can be regulated, thereby controlling the vehicle's speed. Additionally, the vehicle's speed can be regulated by adjusting a power output from the power system 28. The vehicle 1 further comprises an accelerator pedal 20 which may serve as a user's primary interface for controlling the vehicle speed. As the user depresses the accelerator pedal, an accelerator pedal position sensor (not shown) may detect the position of the pedal and send this information to a vehicle's control system, such as a computer system 400 as shown in FIG. 1. Based on this input, the vehicle control system may adjust the power output from the power system 28, enabling smooth and responsive acceleration or deceleration.

Moreover, the vehicle 1 comprises a cruise control system 22. The cruise control system 22 may automatically control the speed of the vehicle 1 without a user needing to keep their foot on the accelerator pedal 22. For instance, the cruise control system 22 may adjust a throttle in vehicles with internal combustion engines, or a motor controller in electric vehicles, to maintain the speed to a target speed. A user may set or modify the target speed via a user input interface (not shown), such as buttons or switches on a steering wheel or dashboard, and the cruise control system 22 may make incremental adjustments to ensure that the vehicle 1 stays at the target speed. In some examples, the cruise control system 22 may use data from a navigation systems, digital maps, and various sensors to adjust the vehicle's speed based on upcoming road topography and traffic conditions. In these examples, the target speed may be set automatically by the cruise control system 22.

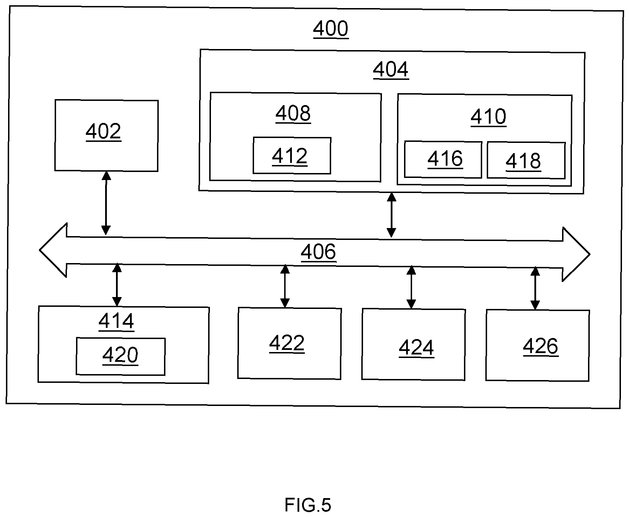

Furthermore, the vehicle 1 comprises a computer system 400, which may comprise one or more control units, such as processing circuitry 402 (see FIG. 5) that can issue control data for controlling the cruise control system 22. The computer system 400 may be adapted to communicate with the cruise control system 22 and also the power system 28. In some examples, the computer system 400 may be integrated into the cruise control system 22 and considered to be part of the cruise control system 22.

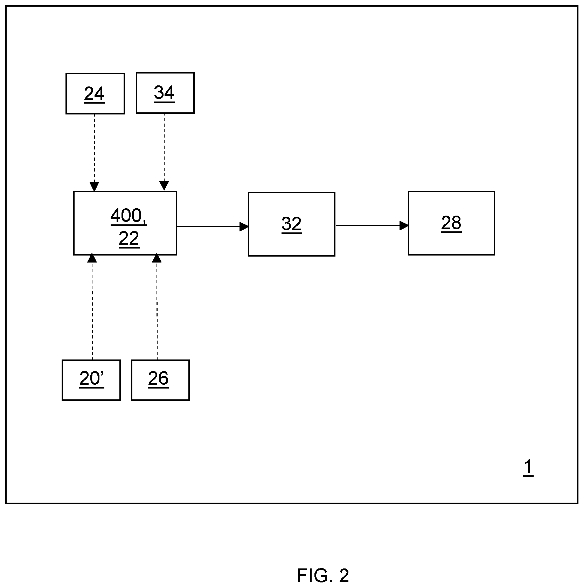

FIG. 2 schematically shows a cruise control system 22 and its associated systems in a vehicle, such as in the FIG. 1 vehicle. As mentioned above, the cruise control system 22 may comprise the computer system 400 as an integrated entity. The computer system 400 comprises processing circuitry 402 (see FIG. 5) that may be communicatively connected to various sensors 20', 26 and components 24 of the vehicle 1. The processing circuitry 402 is configured to obtain a target speed via a user input interface 24, such as buttons or switches on a steering wheel or dashboard. Alternatively, the processing circuitry 402 may obtain the target speed using map data information which speed limit of a road that the vehicle 1 is currently travelling on or a road that the vehicle 1 is approaching. The processing circuitry 402 may obtain this information from navigation sensors 26, which may provide location data to access the relevant map data to fetch the speed limit information. The speed limit may be automatically set as the target speed. Moreover, the processing circuitry 402 is configured to determine a minimal allowed speed to which the vehicle is allowed to reduce on the basis of the target speed. In some examples, the vehicle 1 may comprise a standard driving mode and a fuel-saving mode, whereby the minimal allowed speed may correspond to a speed operated under the fuel-saving mode. The minimal allowed speed may be set lower than the target speed by a predefined value. Purely by way of example, the minimum allowed speed could be set from 5 km/h to 10 km/h lower than the target speed, allowing the vehicle 1 to operate in a fuel-saving mode. In some other examples, the minimal allowed speed may be determined based on a characteristic of a road that the vehicle is currently travelling on or a road that the vehicle is approaching. For instance, the minimal allowed speed may be set lower, such as further from the target speed, for curved or hilly roads compared to flat roads. As another non-limiting example, the minimum speed may be reduced in urban areas compared to highways. In the example where the characteristics of the road comprise a roundabout, the minimal allowed speed may be determined based on a radius of the roundabout.

Moreover, the processing circuitry 402 is configured to temporarily adjust the minimal allowed speed until a criterion is fulfilled in response to determining that the accelerator pedal 20 has been depressed, for instance, by receiving a signal indicating a position of the accelerator pedal from an accelerator pedal position sensor 20'. The processing circuitry 402 may temporarily increase the minimal allowed speed until a criterion is fulfilled. In some examples, the criterion is fulfilled when the minimal allowed speed has reached the target speed. This may ensure that the minimal allowed speed does not surpass the predetermined target speed, maintaining consistent speed control as intended by the cruise control system. In some other examples, the criterion is fulfilled when the minimal allowed speed has reached a speed that corresponds to a degree that the accelerator pedal 20 is depressed, whereby the speed is higher than the minimal allowed speed but lower than the target speed. In these examples, the minimal allowed speed may be adjusted to any value between the initial determined speed and the target speed set by an operator using the accelerator pedal. The processing circuitry 402 may send a control signal to a power control unit 32, such as a throttle if the power system 28 comprises an internal combustion engine, or a motor controller if the power system 28 comprises one or more electric motors, to increase the power output from the power system 28 accordingly.

To this end, it shall be noted that a user may set a comfortable cruising speed using the steering wheel and make temporary adjustments using the accelerator pedal without disrupting the overall driving experience. This separation of controls may reduce the cognitive load on the user, as the user does not have to constantly manage both the cruising speed and immediate speed adjustments with a single control.

Moreover, the processing circuitry 402 may be further configured to cause a user interface to communicate the target speed and the minimal allowed speed to a user. In some examples, the user interface may be the user input interface 24, which may be an infotainment screen. The processing circuitry 402 may cause the screen to display both the target speed and the minimal allowed speed. The processing circuitry 402 may be configured to activate the cruise control system 22 at an appropriate time.

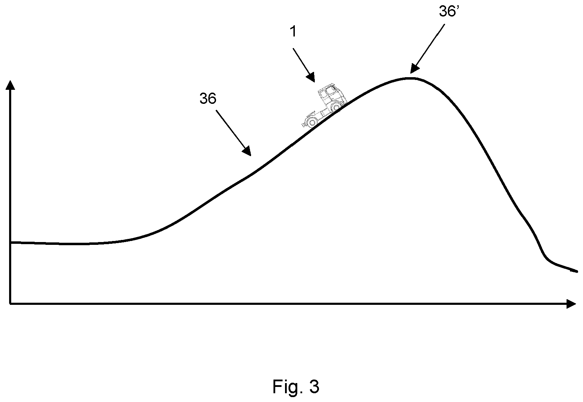

In some examples, the processing circuitry 402 is also communicatively connected to a vehicle speed sensor 34. The processing circuitry 402 may further be configured to determine that a driving condition has changed, and in response thereto, determine that a reset condition is fulfilled so as to reset the temporarily increased speed to the determined minimal allowed speed. The processing circuitry 402 may cause the cruise control system 22 to automatically reset the minimal allowed speed to its initial value. FIG. 3 schematically illustrates an example where a change in driving conditions is indicated by the start of acceleration. As shown in the figure, vehicle 1 is travelling on a hill 36 with a topmost point 36' of the hill in the front. The vehicle 1 may initially operate at the minimal allowed speed, which may be set conservatively lower than necessary and impact a driving comfort. The user may feel uncomfortable and may depress the accelerator pedal 20, an action detected by the accelerator pedal position sensor 20'. In response, the processing circuitry 402 may temporarily increase the minimum allowed speed by sending a control signal to the power control unit 32, adjusting it up to the target speed. When the vehicle 1 reaches the upmost point 36' of the hill, it may begin to accelerate due to gravity as it starts the downhill descent. This acceleration may indicate a change in a driving condition, prompting the temporarily increased speed to be reset to the initial minimum allowed speed, or adjusted to a new minimum allowed speed if a new target speed is determined.

As another non-limiting example, the vehicle 1 may approach a roundabout, whereby the minimum allowed speed is set based on the radius of the roundabout. However, the user intends to turn right rather than enter the roundabout. The user may press the accelerator pedal so as to temporarily increase the minimal allowed speed. Once the vehicle 1 has completed the right turn, it starts to accelerate, indicating that a new driving condition has been established. In this example, the minimal allowed speed may be reset to a new value as a new target speed is probably obtained.

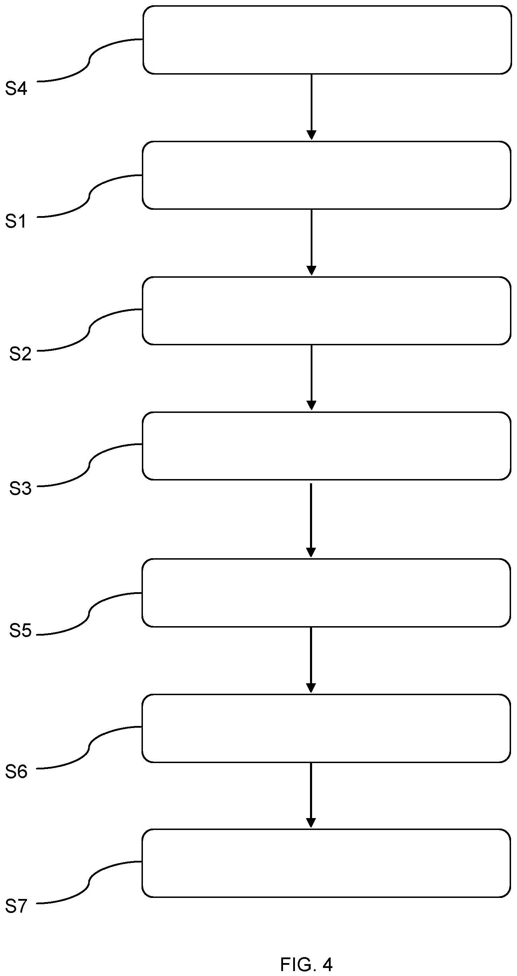

It should be noted that the above presentation of the cruise control system 22 and the processing circuitry 402 should also be regarded as disclosing a method for controlling cruise control system 22. FIG. 4 illustrate a flowchart of actions involved in a method controlling the cruise control system 22. The method may be performed by processing circuitry of a computer system 400, such as the vehicle onboard computer system 400. The method comprises at least one of the actions listed in the following, which, unless otherwise indicated, may be taken in any suitable order.

S 1: obtaining a target speed.

S2: on the basis of the target speed, determining a minimal allowed speed to which the vehicle is allowed to reduce.

S3: in response to determining that the accelerator pedal 20 has been depressed, temporarily adjusting the minimal allowed speed until a criterion is fulfilled.

The method may further comprise the following actions:

S4: activating S4 the cruise control system 22.

S5: determining that driving conditions have changed;

S6: in response thereto, determine that a reset condition is fulfilled, resetting the temporarily increased speed to the determined minimal allowed speed.

S7: obtaining map data information, the map data information comprising speed limit of a road that the vehicle 1 is currently travelling on or a road that the vehicle 1 is approaching.

**FIG 5****.** illustrates a computer system 400, such as the vehicle on-board computer system 400, for performing the method. Computer system **400** is adapted to execute instructions from a computer-readable medium to perform these and/or any of the functions or processing described herein. The computer system **400** may be connected e.g., networked) to other machines in a LAN, an intranet, an extranet, or the Internet. While only a single device is illustrated, the computer system **400** may include any collection of devices that individually or jointly execute a set or multiple sets of instructions to perform any one or more of the methodologies discussed herein. Accordingly, any reference in the disclosure and/or claims to a computer system, computing system, computer device, computing device, control system, control unit, electronic control unit ECU, processor device, processing circuitry, etc., includes reference to one or more such devices to individually or jointly execute a set or multiple sets) of instructions to perform any one or more of the methodologies discussed herein. For example, the control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network CAN bus, etc.

The computer system **400** may comprise at least one computing device or electronic device capable of including firmware, hardware, and/or executing software instructions to implement the functionality described herein. The computer system **400** may include processing circuitry **402** e.g., processing circuitry including one or more processor devices or control units), a memory **404**, and a system bus **406**. The computer system **400** may include at least one computing device having the processing circuitry **402**. The system bus **406** provides an interface for system components including, but not limited to, the memory **404** and the processing circuitry **402**. The processing circuitry **402** may include any number of hardware components for conducting data or signal processing or for executing computer code stored in memory **404**. The processing circuitry **402** may, for example, include a general-purpose processor, an application specific processor, a Digital Signal Processor DSP, an Application Specific Integrated Circuit ASIC, a Field Programmable Gate Array FPGA, a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus with or without a memory controller, a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** e.g., via a circuit or any other wired, wireless, or network connection) and may include computer code for executing one or more processes described herein. The memory **404** may include non-volatile memory **408** e.g., read-only memory ROM), erasable programmable read-only memory EPROM, electrically erasable programmable read-only memory EEPROM, etc., and volatile memory **410** e.g., random-access memory RAM)), or any other medium which can be used to carry or store desired program code in the form of machine-executable instructions or data structures and which can be accessed by a computer or other machine with processing circuitry **402**. A basic input/output system BIOS) **412** may be stored in the non-volatile memory **408** and can include the basic routines that help to transfer information between elements within the computer system **400**.

The computer system **400** may further include or be coupled to a non-transitory computer-readable storage medium such as the storage device **414**, which may comprise, for example, an internal or external hard disk drive HDD) e.g., enhanced integrated drive electronics EIDE or serial advanced technology attachment SATA, HDD e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The modules can be implemented as software and/or hard-coded in circuitry to implement the functionality described herein in whole or in part. The modules may be stored in the storage device **414** and/or in the volatile memory **410**, which may include an operating system **416** and/or one or more program modules **418**. All or a portion of the examples disclosed herein may be implemented as a computer program **420** stored on a transitory or non-transitory computer-usable or computer-readable storage medium e.g., single medium or multiple media), such as the storage device **414**, which includes complex programming instructions e.g., complex computer-readable program code to cause the processing circuitry **402** to carry out actions described herein. Thus, the computer-readable program code of the computer program **420** can comprise software instructions for implementing the functionality of the examples described herein when executed by the processing circuitry **402**. In some examples, the storage device **414** may be a computer program product e.g., readable storage medium storing the computer program **420** thereon, where at least a portion of a computer program **420** may be loadable e.g., into a processor) for implementing the functionality of the examples described herein when executed by the processing circuitry **402**. The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers IEEE 1394 serial port, a Universal Serial Bus USB) port, an IR interface, and the like. The computer system **400** may include an output device interface **424** configured to forward output, such as to a display, a video display unit e.g., a liquid crystal display LCD or a cathode ray tube CRT. The computer system **400** may include a communications interface **426** suitable for communicating with a network as appropriate or desired.

Moreover, the present disclosure may be exemplified by any one of the below examples and combination of examples.
Example 1: A computer system (400) comprising processing circuitry (402) configured to control a cruise control system (22) of a vehicle (1), the vehicle (1) comprising a power system (28) configured to provide propulsion power to the vehicle (1), and an accelerator pedal (20), wherein the processing circuitry (402) being further configured to:
   - obtain a target speed;
   - on the basis of the target speed, determine a minimal allowed speed to which the vehicle (1) is allowed to reduce; and
   - in response to determining that the accelerator pedal (20) has been depressed, temporarily adjust the minimal allowed speed until a criterion is fulfilled.
Example 2: The computer system (400) according to Example 1, wherein the feature of temporarily adjust the minimal allowed speed until a criterion is fulfilled comprise temporarily increase the minimal allowed speed until a criterion is fulfilled.
Example 3: The computer system (400) according to any one of Examples 1-2, wherein the processing circuitry (402) is further configured to activate the cruise control system (22).
Example 4: The computer system (400) according to any one of Examples 1-3, wherein the criterion is fulfilled when the minimal allowed speed has reached the target speed.
Example 5: The computer system (400) according to any one of Examples 1-4, wherein the criterion is fulfilled when the minimal allowed speed has reached a speed that corresponds to a degree that the accelerator pedal (20) is depressed, and wherein the speed is higher than the minimal allowed speed but lower than the target speed.
Example 6: The computer system (400) according to any one of Examples 1-5, wherein the vehicle (1) is travelling on a road with predetermined road characteristics, wherein the processing circuitry (402) is further configured to:
   - determine that a driving condition has changed; and
   - in response thereto, determine that a reset condition is fulfilled, reset the temporarily increased speed to the determined minimal allowed speed.
Example 7: The computer system (400) according to Example 6, wherein the predetermined road characteristics comprises an uphill with a topmost point of the hill in the front or a roundabout, wherein the feature of determining that a driving condition has changed comprises determine that a vehicle starts to accelerate.
Example 8: The computer system (400) according to any one of Examples 1-7, wherein the target speed is associated with a speed limit of a road, and wherein the feature of obtaining a target speed comprises:
   - obtain map data information, the map data information comprising speed limit of a road that the vehicle (1) is currently travelling on or a road that the vehicle (1) is approaching.
Example 9: The computer system (400) according to any one of Examples 1-8, wherein the target speed is obtained via a user interface.
Example 10: The computer system (400) according to any one of the preceding Examples, wherein the minimal allowed speed is lower than the target speed by a predefined value.
Example 11: The computer system (400) according to any one of the preceding Examples, wherein the minimal allowed speed is determined based on a characteristic of a road that the vehicle (1) is currently travelling on or a road that the vehicle (1) is approaching.
Example 12: The computer system (400) according to Example 11, wherein the characteristics of the road comprise a roundabout, wherein the minimal allowed speed is determined based on a radius of the roundabout.
Example 13: The computer system (400) according to any one of the preceding Examples, wherein the processing circuitry (402) is further configured to cause a user interface to communicate the target speed and the minimal allowed speed to a user.
Example 14: A vehicle (1) comprising a cruise control system (22) and the computer system (400) of any of Examples 1-13.
Example 15: A computer-implemented method for controlling a cruise control system (22) of a vehicle (1), the vehicle (1) comprising a power system (28) configured to provide propulsion power to the vehicle (1), and an accelerator pedal (20), the method comprising:
   - obtaining (S1), by processing circuitry (402) of a computer system (400), a target speed;
   - on the basis of the target speed, determining (S2), by the processing circuitry (402), a minimal allowed speed to which the vehicle (1) is allowed to reduce; and
   - in response to determining that the accelerator pedal (20) has been depressed, temporarily adjusting (S3), by the processing circuitry (402), the minimal allowed speed until a criterion is fulfilled.
Example 16: The computer-implemented method according to Example 15, wherein temporarily adjusting the minimal allowed speed comprises temporarily increasing the minimal allowed speed.
Example 17: The method according to any one of Examples 15-16, further comprising activating (S4) the cruise control system (22).
Example 18: The method according to any one of Examples 15-17, wherein the criterion is fulfilled when the minimal allowed speed has reached the target speed.
Example 19: The method according to any one of Examples 15-18, wherein the criterion is fulfilled when the minimal allowed speed has reached a speed that corresponds to a degree that the accelerator pedal (20) is depressed, and wherein the speed is higher than the minimal allowed speed but lower than the target speed.
Example 20: The method according to any one of Examples 15-19, wherein the vehicle (1) is travelling on a road with predetermined road characteristics, wherein the method further comprising:
   - determining (S5), by the processing circuitry (402), that a driving condition has changed;
   - in response thereto, determine that a reset condition is fulfilled, resetting (S6), by the processing circuitry (402), the temporarily increased speed to the determined minimal allowed speed.
Example 21: The method according to Example 20, wherein the predetermined road characteristics comprises an uphill with a topmost point of the hill in the front or a roundabout, wherein the feature of determining that a driving condition has changed comprises determine that a vehicle starts to accelerate.
Example 22: The method according to any one of Examples 15-21, wherein the target speed is associated with a speed limit of a road, and wherein the method further comprises:
   - obtaining (S7), by the processing circuitry (402), map data information, the map data information comprising speed limit of a road that the vehicle (1) is currently travelling on or a road that the vehicle (1) is approaching.
Example 23: The method according to any one of Examples 15-21, wherein the target speed is obtained via a user interface.
Example 24: The method according to any one of Examples 15-23, wherein the minimal allowed speed is lower than the target speed by a predefined value.
Example 25: The method according to any one of Examples 15-24, wherein the minimal allowed speed is determined based on a characteristic of a road that the vehicle (1) is currently travelling on or a road that the vehicle (1) is approaching.
Example 26: The method according to Example 25, wherein the characteristics of the road comprise a roundabout, wherein the minimal allowed speed is determined based on a radius of the roundabout.
Example 27: The method according to any one of Examples 15-26, wherein the method further comprises causing (S8), by the processing circuitry (402), a user interface to communicate the target speed and the minimal allowed speed to a user.
Example 28: A computer program product comprising program code for performing, when executed by the processing circuitry (402), the method of any of Examples 15-27.
Example 29: A non-transitory computer-readable storage medium comprising instructions, which when executed by the processing circuitry, cause the processing circuitry (402) to perform the method of any of Examples 15-27.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (400) comprising processing circuitry (402) configured to control a cruise control system (22) of a vehicle (1), the vehicle (1) comprising a power system (28) configured to provide propulsion power to the vehicle (1), and an accelerator pedal (20), wherein the processing circuitry (402) being further configured to:
- obtain a target speed;
- on the basis of the target speed, determine a minimal allowed speed to which the vehicle (1) is allowed to reduce; and
- in response to determining that the accelerator pedal (20) has been depressed, temporarily adjust the minimal allowed speed until a criterion is fulfilled.

2. The computer system (400) according to claim 1, wherein the feature of temporarily adjust the minimal allowed speed until a criterion is fulfilled comprise temporarily increase the minimal allowed speed until a criterion is fulfilled.

3. The computer system (400) according to any one of claims 1-2, wherein the criterion is fulfilled when the minimal allowed speed has reached the target speed.

4. The computer system (400) according to any one of claims 1-3, wherein the criterion is fulfilled when the minimal allowed speed has reached a speed that corresponds to a degree that the accelerator pedal (20) is depressed, and wherein the speed is higher than the minimal allowed speed but lower than the target speed.

5. The computer system (400) according to any one of claims 1-4, wherein the vehicle (1) is travelling on a road with predetermined road characteristics, wherein the processing circuitry (402) is further configured to:
- determine that a driving condition has changed; and
- in response thereto, determine that a reset condition is fulfilled, reset the temporarily increased speed to the determined minimal allowed speed.

6. The computer system (400) according to claim 5, wherein the predetermined road characteristics comprises an uphill with a topmost point of the hill in the front or a roundabout, wherein the feature of determining that a driving condition has changed comprises determine that a vehicle starts to accelerate.

7. The computer system (400) according to any one of claims 1-6, wherein the target speed is associated with a speed limit of a road, and wherein the feature of obtaining a target speed comprises:
- obtain map data information, the map data information comprising speed limit of a road that the vehicle (1) is currently travelling on or a road that the vehicle (1) is approaching.

8. The computer system (400) according to any one of the preceding claims, wherein the minimal allowed speed is lower than the target speed by a predefined value.

9. The computer system (400) according to any one of the preceding claims, wherein the minimal allowed speed is determined based on a characteristic of a road that the vehicle (1) is currently travelling on or a road that the vehicle (1) is approaching.

10. The computer system (400) according to claim 9, wherein the characteristics of the road comprise a roundabout, and wherein the minimal allowed speed is determined based on a radius of the roundabout.

11. The computer system (400) according to any one of the preceding claims, wherein the processing circuitry (402) is further configured to cause a user interface to communicate the target speed and the minimal allowed speed to a user.

12. A vehicle (1) comprising a cruise control system (22) and the computer system (400) of any of claims 1-11.

13. A computer-implemented method for controlling a cruise control system (22) of a vehicle (1), the vehicle (1) comprising a power system (28) configured to provide propulsion power to the vehicle (1), and an accelerator pedal (20), the method comprising:
- obtaining (S1), by processing circuitry (402) of a computer system (400), a target speed;
- on the basis of the target speed, determining (S2), by the processing circuitry (402), a minimal allowed speed to which the vehicle (1) is allowed to reduce; and
- in response to determining that the accelerator pedal (20) has been depressed, temporarily adjusting (S3), by the processing circuitry (402), the minimal allowed speed until a criterion is fulfilled.

14. A computer program product comprising program code for performing, when executed by the processing circuitry (402), the method of any of claim 13.

15. A non-transitory computer-readable storage medium comprising instructions, which when executed by the processing circuitry, cause the processing circuitry (402) to perform the method of claim 13.
